Europäisches Patentamt

European Patent Office (11) Publication number: **0 161 539**

Office européen des brevets **B1**

(12) **EUROPEAN PATENT SPECIFICATION**

(45) Date of publication of patent specification: **17.11.88** (51) Int. Cl.⁴: **G 21 C 3/20**

(21) Application number: **85104810.8**

(22) Date of filing: **20.04.85**

(54) Hydride blister-resistant zirconium-based nuclear fuel rod cladding.

<table>
<tr><td>(30) Priority: <b>07.05.84 US 607871</b></td><td>(73) Proprietor: <b>WESTINGHOUSE ELECTRIC CORPORATION</b><br><b>Westinghouse Building Gateway Center</b><br><b>Pittsburgh Pennsylvania 15222 (US)</b></td></tr>
<tr><td>(43) Date of publication of application:<br><b>21.11.85 Bulletin 85/47</b></td><td></td></tr>
<tr><td></td><td>(72) Inventor: <b>Ferrari, Harry Max</b><br><b>144 W. Swissvale Avenue</b><br><b>Pittsburgh Pennsylvania 15218 (US)</b></td></tr>
<tr><td>(45) Publication of the grant of the patent:<br><b>17.11.88 Bulletin 88/46</b></td><td></td></tr>
<tr><td>(84) Designated Contracting States:<br><b>BE CH DE FR IT LI SE</b></td><td>(74) Representative: <b>Stratmann, Ernst, Dr.-Ing.</b><br><b>Schadowplatz 9</b><br><b>D-4000 Düsseldorf 1 (DE)</b></td></tr>
<tr><td>(56) References cited:<br><b>DE-A-1 521 506</b><br><b>DE-A-2 540 351</b><br><b>FR-A-1 283 560</b><br><b>FR-A-2 399 713</b><br><b>GB-A-1 507 487</b><br><b>US-A-4 314 880</b><br><b>US-A-4 406 012</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method of fabricating a nuclear fuel rod by the deposition of a thin film of nickel metal or of a nickel based alloy on the internal surface of a tubular cladding of the nuclear fuel rod, said cladding formed from a zirconium alloy, containing nuclear fuel therein and having end sealing means thereon to hermetically seal said nuclear fuel within said cladding, whereby the film is deposited over discrete areas of said surface to provide multiple sites of said thin film.

In the production of electrical energy from nuclear reactor systems, the reactor provides heat for steam production and subsequent production of electricity. In the nuclear reactor, nuclear fuel rods are present which contain a nuclear fuel such as pellets of uranium dioxide or a mixture of uranium and plutonium dioxides. These fuel rods are metallic tubular shells, or cladding, which contain the fuel pellets and which must maintain their integrity so as to prevent any leakage into or out of the shell. Some of the conventional light water reactor (LWR) fuel rod designs and support structures are described in J. T. A. Roberts, "Structural Materials in Nuclear Power Systems," Plenum Press, New York, (1981), at pp. 53—61.

The conventional cladding type, at present, is a cladding of a zirconium-based alloy, such as, Zircaloy-2, Zircaloy-4, and zirconium-2,5 weight percent niobium alloy. Other types of cladding have been proposed. These proposals have included cladding of a zirconium base material with various coatings or barrier means provided on the inside wall to protect the cladding from attack by constituents released from the nuclear fuel during operation of a reactor containing the fuel rod. As examples of such coatings or barrier means which cover the full surface of the cladding, US—A—4 022 662 and US—A—4 406 012 describe a cladding in connection with a separate unattached metal liner, or coating, respectively, comprised of stainless steel, copper, copper alloys, nickel or nickel alloys, the liner or coating disposed between the cladding and the fuel material. A diffusion barrier of chromium or chromium alloy is also disposed between the cladding and the metal liner in US—A—4 022 662. In US—A—4 045 288, a composite fuel element cladding is described which comprises a zirconium or zirconium alloy substrate having a metal barrier of 1—4 percent of the wall thickness formed from niobium, aluminum, copper, nickel, stainless steel and iron, and an inner layer of stainless steel, zirconium or a zirconium alloy metallurgically bonded on the inner surface of the metal barrier.

US—A—4 093 756 and US—A—4 137 131 disclose processes for electrodeless deposition of a metal film, such as nickel, on a zirconium or zirconium alloy article.

These, and other patents, have discussed the problems associated with cladding materials and have proposed means for overcoming such problems.

One particular problem that is present in cladding for nuclear fuel rods is the formation of hydride blisters on the cladding inner surface which can lead to eventual fracture or puncturing of the cladding. As discussed in GB—A—1 507 487, US—A—4 279 700, and US—A—4 022 662 referred to above, hydrogen gas can be formed by slow reaction between the cladding, and residual water or other hydrogenous impurities in the sealed rod. Under certain conditions, localized hydriding of the interior surface of the cladding can form a single massive hydride blister which can result in failure of the cladding. Localized hydride blisters form when the zirconium oxide film, which may be intentionally or unintentionally formed on the inner surface of the cladding, becomes scratched or otherwise defective at a very small number of areas (usually one) which acts as a localized hydride sink.

Efforts to prevent hydride blistering have included vacuum outgassing of the fuel rod to improve hydride formatives, which is an expensive and difficult procedure; the use of getters at the top portion of the fuel rod, as described for example in US—A—4 279 700; or extensive drying of the fuel pellets and dry storage thereof to remove all moisture, another expensive and difficult procedure.

From DE—A—2 540 351 there is known a nuclear fuel rod which comprises a tubular cladding formed from a zirconium alloy, whereby a thin film of nickel metal or a nickel based alloy is deposited on the internal surface of said cladding over discret areas of said surface to provide multiple sites of said thin film. The deposition is done during normal operation of the otherwise finished fuel rod by diffusion of nickel vapor from a piece of nickel metal positioned inside a recess on top of each fuel pellet contained in the fuel rod. This known method, therefore, requires quite a complicated form of each fuel pellet and, furthermore, does not lead to a film before the fuel rod has been used for some time in a nuclear power plant.

From US—A—4 406 012 it is known to use a composite cladding made from zirconium alloy having a metal layer consisting of nickel of 0,0025 mm or $2{,}5 \cdot 10^{-6}$ m.

From GB—A—1 507 487 it is known to use a coating in the form of one or more strips, whereby for multiple strips there can be both longitudinal and transverse gaps between the strips.

It is the object of the invention to provide a method of fabricating a nuclear fuel rod as mentioned at the beginning of this description whereby the depositing of the film can be effected before the fuel rod is put into use and which does not require a special complicated form of the fuel pellet, whereby providing in an economical and efficient way a fuel rod cladding that is resistant to formation of hydrate blisters from the very beginning of use.

The object is solved by depositing the film before the cladding is sealed by imparting said thin film while breaking or displacing a zirconium oxide film, which may be intentionally formed or results from oxygen-containing components in the fuel rod over the interior surface of the cladding as a protection, at those areas where said thin film is formed.

According to a further embodiment of the invention the film of nickel or of zirconium nickel based alloy is formed by shot peening the interior surface of the cladding with a nickel or nickel coated shot or, in case of desired zirconium nickel based alloy film, with a zirconium nickel based alloy or a zirconium nickel based alloy coated shot.

According to even another embodiment the nickel film or the zirconium nickel based alloy film is formed by passing a soft ball of nickel or of zirconium nickel based alloy having a diameter about the size of the interior diameter of the cladding through the tubular cladding.

Desirably, the method is performed in such a way that the thin film is deposited to a thickness of from 0,01 to $5 \cdot 10^{-6}$ m, in case of a nickel metal film to a thickness of from 0,01 to $2,5 \cdot 10^{-6}$ m.

For the intended transportation of hydrid from the interior of the nuclear fuel rod, the thin film is deposited over only 1 to 40 percent of the area of said internal surface, since less than 1 percent would not provide sufficient sites for hydride transport along the whole length of the cladding, while use of nickel film in excess of 40 percent is a waste of nickel and leads to unnecessarily high absorbtion of neutrons. Especially advantageous is a range of 10 to 20 percent.

The film should be distributed substantially uniformly along the length of the interior surface of the fuel rod, and the method of the invention provides this, even in the areas near the ends of the fuel rod cladding, where the prior art, represented by DE—A—2 540 351, might lead to difficulties since the nickel vapor might not reach those areas in view of a blocking plate 15 or the like.

In order that the invention can be more clearly understood, a convenient embodiment thereof will now be described, by way of example, with reference to the accompanying drawings in which:

Figure 1 is a longitudinal sectional view of a fuel rod containing a plurality of uranium dioxide pellets.

Figure 2 is an enlarged transverse cross-sectional view of the fuel rod of Figure 1 on the line II—II thereof, and

Figure 3 is an enlarged view of a portion of the fuel rod shown in Figure 1, with the fuel removed to expose an intermittent, and substantially uniformly distributed, nickel film.

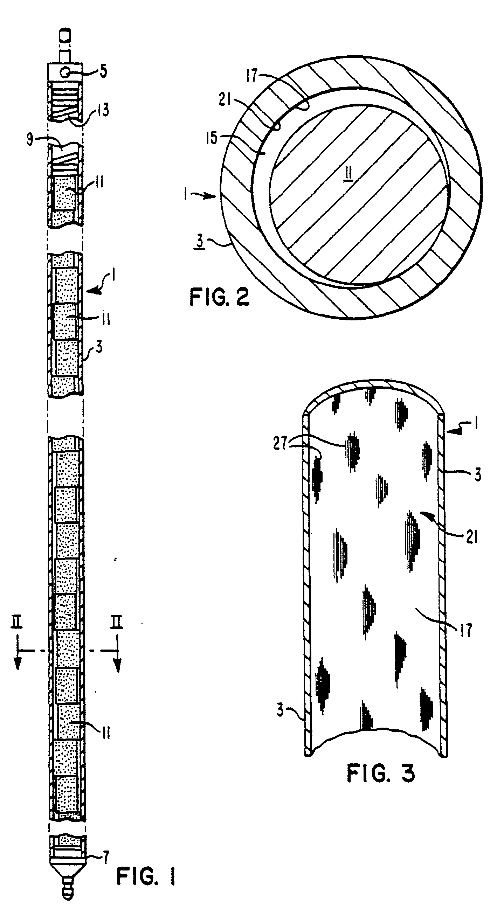

Referring to Figure 1, a fuel rod 1 for use in a nuclear reactor fuel assembly comprises an elongated zirconium-based metallic tubular cladding 3 having a top end plug 5 and a bottom end plug 7 that forms a closed chamber 9. Pressed and sintered nuclear fuel pellets 11 are placed into the chamber 9 and are biased against the bottom end plug 7 by means of a spring 13 or other biasing means. The nuclear fuel pellets 11 are initially of a diameter slightly less than the interior diameter of the zirconium-based metallic cladding 3 resulting in a clearance space. This clearance space 15 is shown in Figure 2, which is an enlarged transverse cross section of the fuel element in Figure 1 viewed along arrows II—II.

As shown in Figure 2, no attempt is made to control the radial position of the fuel pellet 11, and in fact individual pellets 11 are in point or line contact with the inner surface 21 of the cladding 3. Also, during use, the clearance space 15 will diminish in size due to creep of the cladding material and swelling of the fuel pellets 11, and the clearance space 15 will tend to disappear in most or substantially all of the interior regions of the fuel rod 1. The chamber 9 is normally filled with a helium atmosphere, while a protective zirconium oxide film 17, which may be intentionally formed or results from oxygen-containing components in the fuel rod, is present over the interior surface 21 of the cladding 3.

The zirconium-based metallic tubular cladding has a thin film of nickel metal on a portion of the inner surface of the metallic cladding to provide multiple sites for hydride transport to the cladding. As illustrated in Figure 3, the nuclear fuel rod 1 comprising the zirconium-based metallic cladding 3, in which there are contained the fuel pellets, has a thin film of nickel metal 27 over a portion of the inner surface 21, preferably breaking or displacing as much as possible in those areas, the zirconium oxide film 17 on the cladding 3. In order to better show the nickel film 27, the nuclear fuel pellets have been removed in the drawing.

The nickel film 27 is intermittently disposed over only about 1—40 percent of the area of the internal surface 21 of the metallic cladding 3, in order to provide sites for hydride transport to the cladding 3, and is preferably disposed over about 10—20 percent of the area of the internal surface 21. The presence of the nickel film over less than about one percent of said interior surface would not provide sufficient sites for hydride transport along the length of the cladding, while use of nickel film over more than about 40 percent of said interior surface, in addition to wasting the nickel, would tend to unnecessarily absorb neutrons and decrease the efficiency of the energy output from the rod.

The term nickel "film" is used herein to describe the deposition of the nickel over the interior surface since the thickness of the nickel deposition is very small. The thickness of the nickel film on the interior surface is from 0.01 to 5 microns and preferably from 0.01 to 2.5 microns. Use of a film of less than 0.01 micron in thickness would not provide enough nickel to effect sufficient hydride transfer. A thickness of greater than about 5 microns, in addition to being economically inefficient, would unnecessarily provide excess nickel for the absorption of neutrons from the fuel and thus reduce the efficiency of the nuclear fuel rod.

The nickel film may be formed by shot peening the interior surface of the cladding with nickel or nickel coated shot, by passing a soft ball of nickel having a diameter about the size of the interior diameter of the cladding through the tubular cladding, or by other methods which would impart a thin film of nickel on the interior surface of the cladding while preferably breaking or displacing the zirconium oxide film at those regions where the film is formed. A zirconium-nickel based alloy film may be similarly formed using a zirconium-nickel based alloy shot, for example.

In order to assure hydride transport to the cladding, the thin film of nickel 27 should break or displace the zirconium oxide film 17 present, and should be dispersed over the interior surface 21 as uniformly as is practically achievable. While complete uniformity may not be achievable along the length of the interior surface of the cladding, the nickel film should be so distributed as to cover a substantially uniform area fraction along the interior surface so as to provide sufficient sites for hydride transport regardless of the source of the hydrogen from within the fuel rod.

The metallic cladding used in the present nuclear fuel rod is a zirconium-based alloy, such as Zircaloy-2 or Zircaloy-4. In addition, a layer of zirconium may be bonded in a substantially uniform layer on the inside surface of the zirconium alloy to form a composite cladding. The fuel pellets, as is conventional, may comprise uranium dioxide or a mixed uranium-plutonium dioxide. In situations where it is desired, the fuel rod may also contain a burnable poison such as boron, which burnable poison may be mixed with the nuclear fuel pellets or coated thereon.

In addition to preventing hydride blistering on the zirconium-based cladding, the nickel film may also be useful for formation of a low cost getter at the top section of a fuel rod.

## Claims

1. Method of fabricating a nuclear fuel rod (1) by the deposition of a thin film of nickel metal or of a nickel based alloy on the internal surface (21) of a tubular cladding (3) of the nuclear fuel rod (1), said cladding (3) formed from a zirconium alloy, containing nuclear fuel (11) therein and having end sealing means (5, 7) thereon to hermetically seal said nuclear fuel (11) within said cladding (3), whereby the thin film is deposited over discrete areas (27) of said surface to provide multiple sites of said thin film, characterized in that the thin film (27) is deposited before the cladding (3) is sealed by imparting said thin film (27) while breaking or displacing a zirconium oxide film, formed over the internal surface of the cladding as a protection, at those areas where said thin film (27) is formed.

2. Method according to claim 1, characterized in that the nickel film or the zirconium nickel based alloy film (27) is formed by shot peening the interior surface of the cladding (3) with nickel or nickel coated shot or with a zirconium nickel based alloy or a zirconium nickel based alloy coated shot.

3. Method according to claim 1, characterized in that the nickel film or the zirconium nickel based alloy film (27) is formed by passing a soft ball of nickel or of zirconium nickel based alloy having a diameter about the size of the interior diameter of the cladding (3) through the tubular cladding (3).

4. Method according to claim 1, 2 or 3, characterized in that the thin film (27) is deposited to a thickness of from 0,01 to $5 \cdot 10^{-6}$ m.

5. Method according to claim 4, characterized in that the thin film (27) is of nickel metal and is deposited to a thickness of from 0,01 to $2,5 \cdot 10^{-6}$ m.

6. Method according to any of the claims 1 to 5, characterized in that the thin film (27) is deposited over 1 to 40 percent of the area of said internal surface (21) to provide said multiple sites of said thin film (27) for hydride transport from the interior of the nuclear fuel rod (1).

7. Method according to claim 6, characterized in that the thin film (27) is deposited over 10 to 20 percent of the area of the internal surface (21).

8. Method according to any of the claims 1 to 7, characterized in that the thin film (27) is distributed substantially uniformly along the length of the interior surface (21) of the fuel rod (1).

## Patentansprüche

1. Verfahren zur Herstellung eines Kernbrennstoffstabes (1) durch die Ablagerung eines dünnen Films von Nickelmetall oder von einer auf Nickel basierenden Legierung auf der inneren Oberfläche (21) einer rohrförmigen Hülle (3) des Kernbrennstoffstabes (1), wobei die Hülle (3), gebildet aus einer Zirkonlegierung, in sich Kernbrennstoff (11) enthält und Endabdichteinrichtungen (5, 7) auf sich aufweist, um den Kernbrennstoff (11) innerhalb der Hülle (3) hermetisch abzudichten, wobei der dünne Film über diskreten Gebieten (27) der genannten Oberfläche abgelagert wird, um mehrere Stellen des dünnen Films zu liefern, dadurch gekennzeichnet, daß der dünne Film (27) abgelagert wird, bevor die Hülle (3) abgedichtet wird, indem der genannte dünne Film (27) aufgebracht wird, während ein Zirkonoxidfilm, als ein Schutz auf der inneren Oberfläche der Hülle gebildet, an solchen Gebieten gebrochen oder versetzt wird, so dieser genannte Film gebildet wird.

2. Verfahren nach Anspruch 1, dadurch gekennzeichnet, daß der Nickelfilm oder auf Zirkon-Nickel basierende Legierungsfilm (27) durch Schrotwalzen der inneren Oberfläche der Hülle (3) mit Nickelschrot oder mit mit Nickel beschichteten Schrot oder mit Schrot aus einer auf Zirkon-Nickel basierenden Legierung oder mit Schrot, der mit einer auf Zirkon-Nickel basierenden Legierung beschichtet ist, gebildet wird.

3. Verfahren nach Anspruch 1, dadurch gekennzeichnet, daß der Nickelfilm oder auf Zirkon-Nickel basierende Legierungsfilm (27) gebildet wird durch Hindurchführen einer weichen Kugel aus Nickel oder aus einer auf Zirkon-Nickel basierenden Legierung durch die rohrförmige Hülle (3), welche Kugel einen Durchmesser von etwa der Größe des inneren Durchmessers der Hülle (3) besitzt.

4. Verfahren nach Anspruch 1, 2 oder 3, dadurch gekennzeichnet, daß der dünne Film (27) bis zu einer Dicke von 0,01 bis $5 \times 10^{-6}$ m abgelagert wird.

5. Verfahren nach Anspruch 4, dadurch gekennzeichnet, daß der dünne Film (27) aus Nickelmetall ist und bis zu einer Dicke von 0,01 bis $2,5 \times 10^{-6}$ m abgelagert wird.

6. Verfahren nach einem der Ansprüche 1 bis 5, dadurch gekennzeichnet, daß der dünne Film (27) über 1 bis 40% der Fläche der inneren Oberfläche (21) abgelagert wird, um die mehreren Stellen des dünnen Filmes (27) für Hydridtransport von dem Inneren des Kernbrennstoffstabes (1) zu liefern.

7. Verfahren nach Anspruch 6, dadurch gekennzeichnet, daß der dünne Film (27) auf 10 bis 20% der Fläche der inneren Oberfläche (21) abgelagert wird.

8. Verfahren nach einem der Ansprüche 1 bis 7, dadurch gekennzeichnet, daß der dünne Film im wesentlichen gleichförmige entlang der Länge der inneren Oberfläche (21) des Brennstoffstabes (1) abgelagert wird.

**Revendications**

1. Procédé de fabrication d'une barre de combustible nucléaire (1) par dépôt d'un film mince de nickel métallique ou d'un alliage à base de nickel sur la surface intérieure (21) d'une gaine tubulaire (3) entourant la barre de combustible nucléaire (1), cette gaine (3), réalisée dans un alliage de zirconium, contenant le combustible nucléaire (11) à l'intérieur de celle-ci et comportant des moyens de fermeture étanche (5, 7) sur ses extrémités, de manière à enfermer hermétiquement le combustible nucléaire (11) à l'intérieur de la gaine (3), ce qui permet ainsi de déposer le film mince sur des zones discrètes (27) de la surface pour obtenir des emplacements multiples du film mince, procédé caractérisé en ce que le film mince (27) est déposé avant que la gaine (3) soit scellée, en appliquant le film mince (27), tout en brisant ou en déplaçant un film d'oxyde de zirconium formé sur la surface intérieure de la gaine pour servir de protection, aux endroits où le film mince (27) est formé.

2. Procédé selon la revendication 1, caractérisé en ce que le film de nickel ou le film d'allige à base de zirconium et de nickel (27) est formé par grenaillage de la surface intérieure de la gaine (3) par de la grenaille de nickel ou de la grenaille recouverte de nickel, ou par de la grenaille à base d'alliage de zirconium et de nickel ou de la grenaille recouverte d'un alliage à base de zirconium et de nickel.

3. Procédé selon la revendication 1, caractérisé en ce que le film de nickel ou le film d'alliage à base de zirconium et de nickel (27) est formé en faisant passer dans la gaine tubulaire (3) une bille molle de nickel ou d'alliage à base de zirconium et de nickel, présentant un diamètre approximativement égal au diamètre intérieur de la gaine (3).

4. Procédé selon l'une quelconque des revendications 1 à 3, caractérisé en ce que le film mince (27) est déposé jusqu'à une épaisseur allant de 0,01 à $5 \cdot 10^{-6}$ m.

5. Procédé suivant la revendication 4, caractérisé en ce que le film mince (27) est en nickel métallique, et en ce que ce film est déposé jusqu'à une épaisseur allant de 0,001 à $2,5 - 10^{-6}$ m.

6. Procédé selon l'une quelconque des revendications 1 à 5, caractérisé en ce que le film mince (27) est déposé sur 1 à 40% de la surface intérieure (21) pour former les emplacements multiples du film mince (27) qui sont destinés au transport de l'hydrure à partir de l'intérieur de la barre de combustible nucléaire (1).

7. Procédé selon la revendication 6, caractérisé en ce que le film mince (27) est déposé sur 10 à 20% de la surface intérieure (21).

8. Procédé selon l'une quelconque des revendications 1 à 7, caractérisé en ce que le film mince (27) est réparti parfaitement uniformément suivant la longueur de la surface intérieure (21) de la barre de combustible (1).

FIG. 2

FIG. 3

FIG. I